# EUROPEAN PATENT SPECIFICATION

(11) **EP 3 324 021 B1**
(45) Date of publication and mention of the grant of the patent: **03.03.2021**
(21) Application number: 16382541.7
(22) Date of filing: 21.11.2016
(51) Int. Cl.: F02C 7/277

(54) **AIRCRAFT INCORPORATING A MAIN ENGINE STARTING SYSTEM**
FLUGZEUG MIT HAUPTMOTORSTARTSYSTEM
AÉRONEF INTÉGRANT UN SYSTÈME DE DÉMARRAGE DE MOTEUR PRINCIPAL

(43) Date of publication of application: 23.05.2018
(73) Proprietor: Airbus Operations, S.L., 28906 Getafe (Madrid) (ES)
(72) Inventor: CHIABRANDO, Marcos, Javier, 28906 GETAFE (Madrid) (ES); CARRO SANCHEZ, Miguel Angel, 28906 GETAFE (Madrid) (ES); MARTINEZ SANCHO, Alberto, 28906 GETAFE (Madrid) (ES); MARTINEZ VILLACORTA, Samuel, 28906 GETAFE (Madrid) (ES); FERNANDEZ-LOPEZ, Pio, 28906 GETAFE (Madrid) (ES)
(74) Representative: Herrero & Asociados, S.L.

(56) References cited:
- US-A1- 2013 031 912
- US-A1- 2014 373 518
- US-A1- 2014 373 553
- US-A1- 2015 167 553

## Description

### Object of the invention

The present invention refers to system for controlling aircraft main engines cooling during starting operations.

The invention provides a controlled reduced rotating speed during main engines cooling or cranking operation before starting main engines, in order to mitigate bowed rotor phenomenon.

An object of the invention is to reduce starting times, and increase reliability of starting air valves and pneumatic energy source.

### Background of the invention

Typically aircraft main engines use an air turbine starter to initiate engine rotation. The air turbine starter is coupled with a high pressure fluid source, such as compressed air, which impinges upon turbine blades of the turbine starter causing its rotation at a high speed. The air turbine starter includes an output shaft that is coupled to the high pressure rotor usually by means of one or more gears, to the main engine gearbox such that the main engine is rotated with the air turbine starter.

When the main engine reaches a predetermined speed, fuel is in injected to the main engine to ignite the same such that a self-sustaining speed is achieved and normal operation is enabled without further assistance.

Typically, the pneumatic power provided to start the main engine via the air turbine starter is provided by an auxiliary power unit (APU). Generally, such APUs may include one or more compressors, combustors, and turbines to generate mechanical and electrical power, particularly when the aircraft is on the ground. Additionally, air from one of the APU compressors may be used to drive the main engine via the air turbine starter.

One known problem when starting aircraft main engines is the rotor cooling, while it is under the bow rotor phenomenon effects.

The bow rotor phenomenon is a well-known problem in turbo-machines, and it is explained below:
- During engine operation, cooling air for the high-pressure (HP) turbine discs is flowing through the cooling air passages created for this function. After SD the engine, High pressure compressor and turbine discs remain hot.
- Unsymmetrical gravity thermal convection takes place around the HP-turbine, the hot air moves to the upper part of the casing while cold air goes down. Thermal convection created by this phenomenon is not compensated by the opposite heat transfer, creating an important temperature gradient between the top and bottom of the HP section (as much as 12°C).
- This temperature difference between top and bottom of the HP-rotor create thermo-mechanical loads; and as per the usual architecture of the engines (log spool between two bearings); the shaft bends between the isostatic points as an arc (this is where the name comes from).
- A restart with a bowed rotor can result in increased vibrations and the risk of rubbing HP-rotor blades against the abradable which leads to performance deterioration and damage to the blade.

Different engines configurations or architectures provides different duration of this phenomenon. Usually it is maximum after 1 ½ hour after engine Shut Down (SD), and it takes more than 6 hours to vanish, depending on the external temperature and wind conditions. Consequences of an engine start with the Bowed Rotor could result in damage to the engine compressor, N2 vibrations and even a compressor stall.

Current fleet utilization trends shows that around 60% of the aircraft operators shutdown the engines around 1-1½ hour between flights. This means that the next engine run will be with the Engine Bow Rotor Phenomenon closer to its maximum position. The operators cannot wait more than 6 hours to the next engine run.

In some particular cases the speed at which damages could occur is very slow, so that some specific solutions for the bow-rotor phenomenon have been proposed:
1.- One known solution is the use of any mean to perform a very slow engine rotation for a very long time in order to equalize temperatures, thus minimizing the bow effect.
2.- Another known solution consist of cooling the engine (or the temperature homogenization) before the engine start. To perform this solution there are some alternatives:
   2a.-Engine cranking at max crank speed → only allowed for some type of engines.
   2b.- Engine cranking at variable speed, with engine internal aerodynamic control of rotating speed → Only of the high speed range.
   2c.- Engine moderated speed cranking, controlling rotating speed by regulating the pressurized air which reaches the engine turbine starter. The control of this air could be performed with an open-close valve in a dynamically stabilized semi-open position restricts the airflow supply to the pneumatic starter.

State of the art examples are shown in US2014/373553 and US2014373518.

### Summary of the invention

The present invention is defined in the attached independent claim 1 and its dependent claims.

One aspect of the invention refers to an aircraft comprising at least one main engine and a pneumatic starter mechanically coupled with the main engine, so that a pneumatic source, for example an Auxiliary Power Unit (APU), is fluidly communicated with the pneumatic starter to supply pressurized air thereto for starting the main engine.

A first starter flow control valve is arranged at the pneumatic source output, and a second starter flow control valve is arranged at the pneumatic starter input to regulate airflow reaching the pneumatic starter.

A first control system is provided for controlling the pneumatic source air pressure output, and a second control system is provided for controlling the operation of the main engine and the second starter flow control valve.

The first control system has a data chart that contains predetermined pressure values of the pneumatic source, said values corresponding to ambient conditions, like ambient temperature values, to obtain a desired rotating speed for the main engine for that ambient condition. The first control system is adapted for controlling the pneumatic source air pressure output based on said data chart, in order to rotate the main engine within a predefined rotating speed range during cooling procedure.

The present invention allows a reduced rotating speed during cooling or cranking process before starting the main engine, for internal temperature homogenization.to eliminate the effects produced by the "Bowed Rotor" phenomenon.

Some advantages of the invention compared with the above-mentioned (1,2a-2c) prior art solutions are:
1.- Contrary to the slow motoring solution, the invention does not require the installation of new hardware to the aircraft, so that no new failure modes have to be taken into consideration. Since the invention is activated only before starting the main engine, it only requires the auxiliary bleed air supply only for a few minutes.
   2a.- Unlike this solution of the prior art which can only be applied to specific engines, the invention is applicable to any engine architecture.
   2b.- Unlike this solution of the prior art which can only be applied to specific engines, the invention is applicable to any engine architecture.
   2c.- The invention has the following advantages:
      - control a reduced rotating speed by the means of a controlled-predefined bleed air pressure supply.
      - reduction of starting time.
      - Increased starting air valve (SAV) reliability, by reducing SAV oscillations.
      - Increased pneumatic energy source / APU reliability.
      - reduction of operational interruptions due to SAV's failures (a failure of an SAV would led to a NO GO).
      - valid for single or dual crank.

### Brief description of the drawings

Preferred embodiments of the invention are henceforth described with reference to the accompanying drawings, wherein:
Figure 1.- shows an schematic representation of an aircraft according to the invention.
Figure 2.- shows an schematic representation of a system according to the invention.
Figure 3.- is a diagram illustrating the desired rotating speed range achieved with the invention during cooling procedure.

### Preferred embodiment of the invention

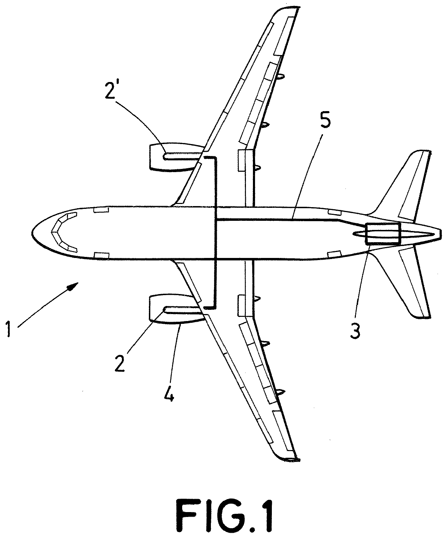

Figure 1 shows an aircraft (1) comprising two main engines (2,2') each one consisting of a gas turbine, and An Auxiliary Power Unit (APU) (3) as a pneumatic source, fluidly communicated through a bleed air duct (5) with a pneumatic starter (4) of one of the main engines or alternatively with the pneumatic starters of the two main engines. The (APU) (3) supplies pressurized air to the pneumatic starter (4), which is mechanically coupled with the main engine (2) for starting the same.

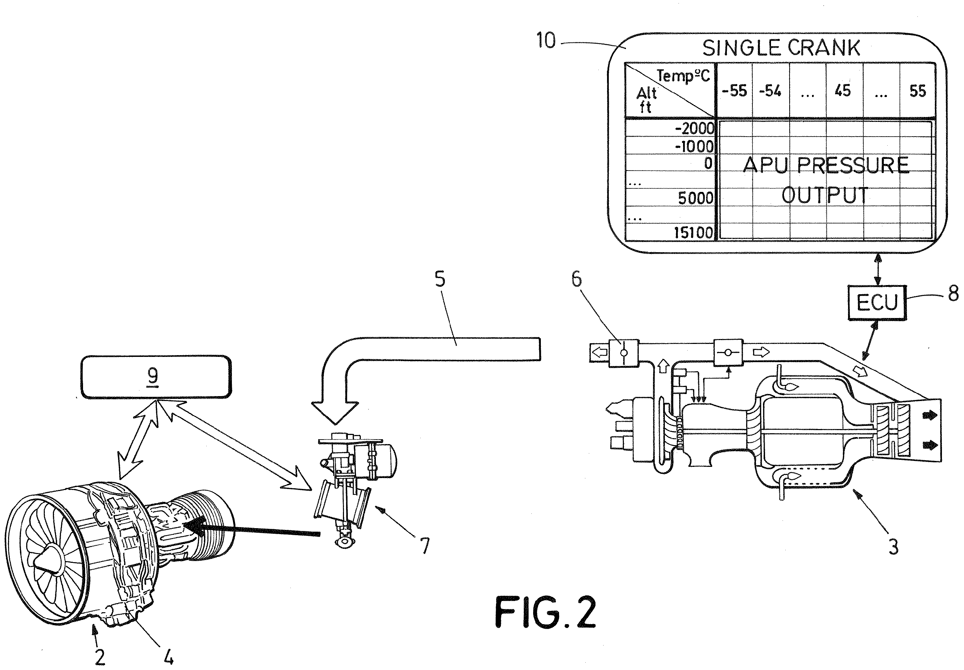

More in detail in view of figure 2, a first starter flow control valve (6) is arranged at the (APU) (3) output, and a second starter flow control valve (7) is arranged at the pneumatic starter (4) input to regulate airflow reaching the pneumatic starter (4). The rotating speed of the main engines, is therefore, proportional the air pressure reaching the pneumatic starter (4).

A first control system, such as an Electronic Control Unit (ECU) (8) is conventionally provided for controlling the APU (3) bleed air pressure output, by controlling the operation of the APU (3) itself and/or the operation of the first starter flow control valve (6), to provide air pressure to rotate the main engine at an rotating speed within a predefined speed range during the cooling process.

A second control system, such as a Full Authority Digital Engine Controller (FADEC) (9), is provided for controlling the operation of the main engine (2) and the second starter flow control valve (7). The (FADEC) (9) is adapted to control the main engine (2) and the second starter flow control valve (7) during cooling, as closed loop regulation process.

According to invention, the Electronic Control Unit (ECU) (8) has a data chart (10) containing predetermined pressure values of the (APU) (3), wherein each of said values corresponds to an ambient condition to obtain a desired rotating speed for the main engine (2) for that ambient condition. The ambient conditions, preferably comprises ambient temperature values.

The predefined pressure values will be included by means of equations or tables in function of current ambient conditions, or by means of data gathered form information sources needed to calculate accurately the pressure required by the main engine.

One parameter which sometimes drives the main engine speed during the cooling phase is the oil temperature, therefore, the electronic Control Unit (ECU) (8) is additionally adapted to read oil temperature and to consider this oil temperature in its control process.

The (ECU) (8) is additionally adapted to regulate the (APU) (3) air pressure output, as an open loop regulation process, and based on said data chart (10). For calculating that speed range, it must be obtained the maximum and minimum bleed air pressure equivalents to obtain the maximum and minimum rotating speed at the main engine. It must include in it the required pressure to obtain the desired rotating speed for each ambient condition, with some corrections such as main engine oil temperature.

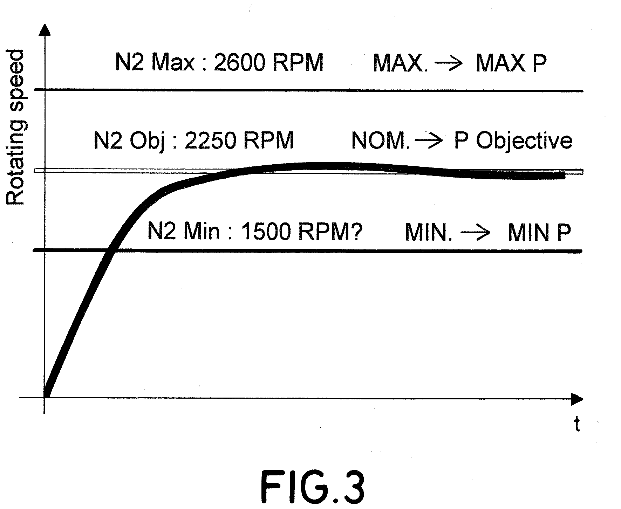

An exemplary speed range is shown in figure 3, wherein the upper and minimum values of the rotating speed range, are the maximum cooling speed and the minimum cooling speed to produce the main engine cooling respectively.

The first starter flow control valve (6) allow to set the (APU) (3) air pressure output at a conservative value of pressure (gross tuning), while the second starter flow control valve (7) controls more precisely the airflow which must reach the pneumatic starter (4) by controlling the position of the second starter flow control valve (7).

The architecture shown in figure 2 which combines an open loop control logic in the APU controller, and a closed loop on the main engine FADEC, allow a fine tuning of the main engine rotating speed.

Other preferred embodiments of the present invention are described in the appended dependent claims.

## Claims

1. An aircraft (1) incorporating a main engine starting system, the aircraft (1) comprising:
a main engine (2) and a pneumatic starter (4) mechanically coupled with the main engine (2) for starting the same,
a pneumatic source fluidly communicated with the pneumatic starter (4) to supply pressurized air thereto,
a first starter flow control valve (6) arranged at the pneumatic source output,
a first control system for controlling the pneumatic source air pressure output,
and wherein the first control system is provided with a data chart (10) containing predetermined pressure values of the pneumatic source, wherein each of said values corresponds to an ambient condition to obtain a desired rotating speed for the main engine (2) for that ambient condition,
and wherein the first control system is adapted to control the pneumatic source air pressure output based on said data chart (10), to rotate the main engine (2) within a predefined rotating speed range during cooling procedure,
**characterized in that** the aircraft (1) further comprises a second starter flow control valve (7) arranged at the pneumatic starter (4) input to regulate airflow reaching the pneumatic starter (4).

2. An aircraft (1) according to claim 1 further comprising a second control system for controlling the operation of the main engine (2) and the second starter flow control valve (7).

3. An aircraft (1) according to claim 1 wherein the first control system is adapted to control the pneumatic source air pressure output as an open loop regulation process.

4. An aircraft (1) according to claim 2 wherein the second control system is adapted to control the main engine (2) and the second starter flow control valve (7), as an closed loop regulation process.

5. An aircraft (1) according to any of the preceding claims, wherein the ambient condition comprise ambient temperature values.

6. An aircraft (1) according to any of the preceding claims, wherein the pneumatic source is an Auxiliary Power Unit (APU) (3).

7. An aircraft (1) according to any of the preceding claims, wherein the main engine (2) is a gas turbine.

8. An aircraft (1) according to any of the preceding claims, wherein the upper and minimum values of the rotating speed range are the maximum cooling speed and the minimum cooling speed to produce the main engine (2) cooling respectively.

## Patentansprüche

1. Flugzeug (1) mit einem Hauptmotorstartsystem, wobei das Flugzeug (1) aufweist:
einen Hauptmotor (2) und einen pneumatischen Starter (4), der mit dem Hauptmotor (2) zum Starten desselben mechanisch gekoppelt ist,
eine Pneumatikquelle, die fluidisch mit dem pneumatischen Starter (4) kommuniziert, um diesem Druckluft zuzuführen,
ein erstes Starter-Strömungssteuerventil (6), das am Pneumatikquellenausgang angeordnet ist,
ein erstes Steuersystem zum Steuern des Pneumatikquellen-Luftdruckausgangs,
und wobei das erste Steuersystem mit einem Datenblatt (10) versehen ist, das vorbestimmte Druckwerte der Pneumatikquelle enthält, wobei jeder der Werte einer Umgebungsbedingung entspricht, um eine gewünschte Drehzahl für den Hauptmotor (2) für diese Umgebungsbedingung zu erhalten,
und wobei das erste Steuersystem derart ausgebildet ist, dass es den Pneumatikquellen-Luftdruckausgang auf der Basis des Datenblatts (10) steuert, um den Hauptmotor (2) beim Kühlvorgang innerhalb eines vordefinierten Drehzahlbereichs zu drehen,
**dadurch gekennzeichnet, dass** das Flugzeug (1) ferner ein zweites Starter-Strömungssteuerventil (7) aufweist, das am Eingang des pneumatischen Starters (4) angeordnet ist, um den den pneumatischen Starter (4) erreichenden Luftstrom zu regeln.

2. Flugzeug (1) nach Anspruch 1, das ferner ein zweites Steuersystem zum Steuern des Betriebs des Hauptmotors (2) und des zweiten Starter-Strömungssteuerventils (7) aufweist.

3. Flugzeug (1) nach Anspruch 1, bei dem das erste Steuersystem derart ausgebildet ist, dass es den Pneumatikquellen-Luftdruckausgang als Regelungsprozess in einem offenen Regelkreis steuert.

4. Flugzeug (1) nach Anspruch 2, bei dem das zweite Steuersystem derart ausgebildet ist, dass es den Hauptmotor (2) und das zweite Starter-Strömungssteuerventil (7) als Regelungsprozess in einem geschlossenen Regelkreis steuert.

5. Flugzeug (1) nach einem der vorhergehenden Ansprüche, bei dem die Umgebungsbedingung Umgebungstemperaturwerte umfasst.

6. Flugzeug (1) nach einem der vorhergehenden Ansprüche, bei dem die Pneumatikquelle ein Hilfstriebwerk (APU) (3) ist.

7. Flugzeug (1) nach einem der vorhergehenden Ansprüche, bei dem der Hauptmotor (2) eine Gasturbine ist.

8. Flugzeug (1) nach einem der vorhergehenden Ansprüche, bei dem die oberen und Minimalwerte des Drehzahlbereichs die maximale Kühldrehzahl und die minimale Kühldrehzahl zum jeweiligen Erzeugen der Kühlung des Hauptmotors (2) sind.

## Revendications

1. Aéronef (1) incorporant un système de démarrage de moteur principal, l'aéronef (1) comprenant :
un moteur principal (2) et un démarreur pneumatique (4) mécaniquement accouplé au moteur principal (2) pour démarrer celui-ci,
une source pneumatique en communication fluidique avec le démarreur pneumatique (4) pour y apporter de l'air comprimé,
un premier clapet de commande de flux de démarreur (6) agencé au niveau de la sortie de source pneumatique,
un premier système de commande pour commander la sortie de pression d'air de source pneumatique,
et dans lequel le premier système de commande est pourvu d'un graphique de données (10) contenant des valeurs de pression prédéterminées de la source pneumatique, dans lequel chacune desdites valeurs correspond à un état ambiant pour obtenir une vitesse de rotation souhaitée pour le moteur principal (2) pour cet état ambiant,
et dans lequel le premier système de commande est adapté pour commander la sortie de pression d'air de source pneumatique sur la base dudit graphique de données (10), pour faire tourner le moteur principal (2) dans une plage de vitesses de rotation prédéfinie durant une procédure de refroidissement,
**caractérisé en ce que** l'aéronef (1) comprend en outre un second clapet de commande de flux de démarreur (7) agencé au niveau de l'entrée du démarreur pneumatique (4) pour réguler le flux d'air atteignant le démarreur pneumatique (4).

2. Aéronef (1) selon la revendication 1 comprenant en outre un second système de commande pour commander le fonctionnement du moteur principal (2) et du second clapet de commande de flux de démarreur (7).

3. Aéronef (1) selon la revendication 1 dans lequel le premier système de commande est adapté pour commander la sortie de pression d'air de source pneumatique en tant que processus de régulation à boucle ouverte.

4. Aéronef (1) selon la revendication 2 dans lequel le second système de commande est adapté pour commander le moteur principal (2) et le second clapet de commande de flux de démarreur (7), en tant que processus de régulation à boucle fermée.

5. Aéronef (1) selon l'une quelconque des revendications précédentes, dans lequel l'état ambiant comprend des valeurs de température ambiante.

6. Aéronef (1) selon l'une quelconque des revendications précédentes, dans lequel la source pneumatique est une unité d'alimentation auxiliaire (APU) (3).

7. Aéronef (1) selon l'une quelconque des revendications précédentes, dans lequel le moteur principal (2) est une turbine à gaz.

8. Aéronef (1) selon l'une quelconque des revendications précédentes, dans lequel les valeurs supérieure et minimale de la plage de vitesses de rotation sont respectivement la vitesse de refroidissement maximale et la vitesse de refroidissement minimale pour produire le refroidissement du moteur principal (2).
